# EUROPEAN PATENT SPECIFICATION

(11) **EP 0 807 575 B1**
(45) Date of publication and mention of the grant of the patent: **14.03.2001**
(21) Application number: 97109737.3
(22) Date of filing: 12.01.1995
(51) Int. Cl.: B64C 21/06, B32B 3/10, B32B 15/00

(54) **Forming of structures**
Formen von Strukturelementen
Formage de structures

(30) Priority: 13.01.1994 GB 9400577
(43) Date of publication of application: 19.11.1997
(62) Divisional of application: 95300180.7
(73) Proprietor: BAE SYSTEMS plc, Farnborough, Hampshire GU14 6YU (GB)
(72) Inventor: Davies, Huw E., Filton, Bristol BS99 7AR (GB)

(56) References cited:
- EP-A- 0 213 217
- EP-A- 0 222 421
- EP-A- 0 436 243
- EP-A- 0 532 093
- EP-A- 0 585 561
- US-A- 3 584 972
- US-A- 4 503 314
- US-A- 5 171 958
- US-A- 5 366 177
- US-A- 5 398 410

## Description

This invention relates to the forming of structures and in particular, though not exclusively, to the forming of structures to support aerodynamic profile-defining panels for aircraft, and indeed for hydrodynamic surfaces where appropriate. The invention finds particular relevance with respect to aerodynamic profile-defining panels, usually at or near the leading edge of aircraft wings, tail planes, etc. which serve to create hybrid laminar flow control by drawing boundary layer air through the profile-defining skin into passages defined in a sub-structure supporting the skin through tiny perforations in the skin.

With hybrid laminar flow control the skin panel of an aerodynamic surface of the aircraft is formed with many thousands of closely spaced perforations which may have a pitch of the order of 0.5mm.

Such a skin panel is disclosed in EP-A-0532093. Although this document is directed at a skin panel per se, it briefly describes a method of attaching stringers to such a skin panel. Specifically the document teaches forming perforations in a skin panel, the perforated skin panel subsequently being formed into the desired shape and attached to stringers.

Attachment of a supporting structure to the skin is complicated by the need to avoid attaching same to the skin in a way which takes up significant surface area of the skin and blocks too many perforations. Such blockages would upset the hybrid laminar flow control by causing unpredictability in the suction effect through the skin which would cause irregularities in the removal of the boundary layer from the airflow over the aerodynamic surface.

Furthermore the perforated skin outer surface has to conform to strict aerodynamic tolerance with respect to joint gaps, protrusions and waviness and a ducted structure to suck air through this perforated skin has to be constructed and sealably attached to this skin to provide support and be used to create suction pressure drop across the skin in defined areas.

It is therefore an object of this invention to provide means for attachment of such a structure to the skin panel to avoid these difficulties.

According to a first aspect of the invention there is provided a method of forming a structure comprising a sheet of perforated metal having an aerodynamic profile-defining surface and a reverse surface, and a series of structural members attached in abutting relationship to the reverse surface, the method including the steps of forming the perforations in the sheet of metal, forming the sheet of metal to the required profile, offering up and attaching each structural member to the reverse surface of the sheet of metal in abutting relationship therewith characterised by attaching each structural member to the reverse surface by partial penetration welding, such that each partial penetration weld only partially penetrates the sheet of metal and leaves the aerodynamic profile-defining surface undisturbed.

The method may include the step of attaching further structure to the series of structural members whereby to form a series of closed passages adjacent the sheet of metal for sucking air through the perforations thereof.

According to a further aspect of the invention there is provided a structure comprising a sheet of perforated metal having an aerodynamic profile-defining surface and a reverse surface, and a series of structural members attached in abutting relationship to the reverse surface, characterised in partial penetration welds attaching the structural members to the reverse surface and only partially penetrating the sheet of metal and leaving the aerodynamic profile-defining surface undisturbed.

The invention will now be described by way of example with regard to the accompanying drawings of which;
Figure 1 shows a structure according to the invention;
Figure 2 shows a sectional detail of a partial penetration weld in accordance with the invention;
Figure 3 shows a perspective view of a structure according to the invention;
Figure 4 shows a section through an alternative structure according to the invention;
Figure 5 shows a sectional detail of another partial penetration weld used according to the invention.

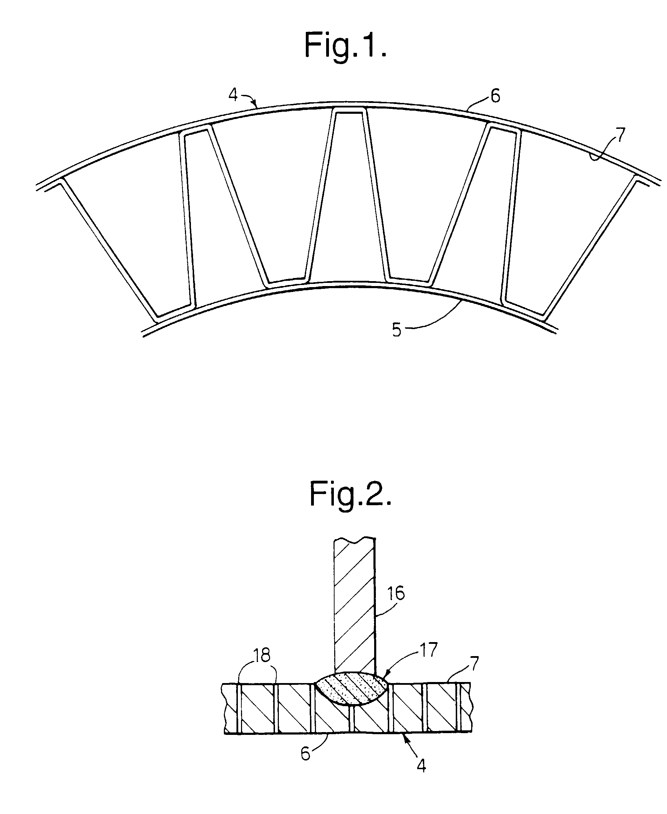

Referring to figures 1 to 5 of the drawings a method of creating a support structure for an aerodynamic profile-defining perforated metal sheet is shown.

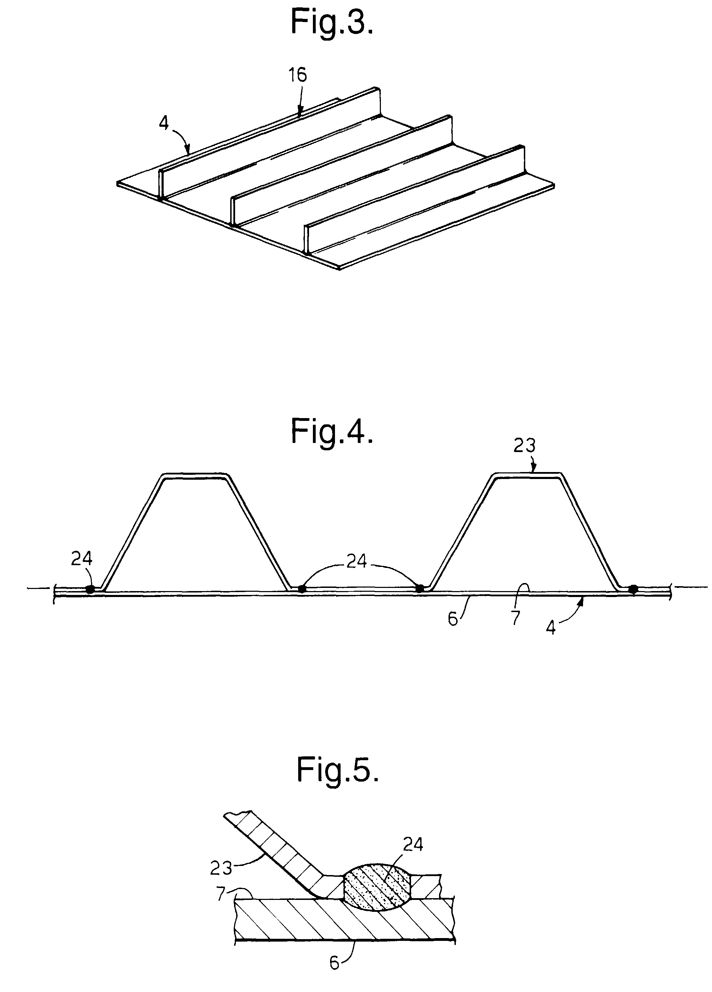

Referring to figures 2 and 3, a perforated titanium sheet 4 is shown having a series of structural members in the form of uprights 16 which are partial penetration welded at welds 17 in abutting relationship with the titanium sheet 4. It will be noted that there is no evidence of the welding on the profile-defining surface 6 of the titanium sheet. In addition, the width of each weld extends only marginally beyond the material of the upright 16 and so intrusion on perforations 18 is minimised. Welding may be carried out from one side of each upright 16 and may thus only extend to one side of each upright. Of equal importance to weld strength in this particular application is continuity of weld as a gas-tight joint is essential for the purposes of controlling hybrid laminar flow over the aerodynamic surface.

In an embodiment (not shown) each upright 16 has a flange to which is attached a membrane made of metal or rubber by conventional fixings. A series of airtight closed passages are thus formed in the structure. Each of these passages will have a suction of a different value applied to it for drawing off the boundary layer of air from the aerodynamic surface 6 in accordance with optimum requirements.

Referring to figures 4 and 5 an alternative form of structure is shown in which a single corrugated titanium sheet 23 is attached to the perforated titanium sheet 4 by a series of partial penetration welds 24.

## Claims

1. A method of forming a structure comprising a sheet of perforated metal (4) having an aerodynamic profile-defining surface (6) and a reverse surface (7), and a series of structural members (16) attached in abutting relationship to the reverse surface (7), the method including the steps of forming the perforations (18) in the sheet of metal (4), forming the sheet of metal to the required profile, offering up and attaching each structural member (16) to the reverse surface (7) of the sheet of metal in abutting relationship therewith characterised by attaching each structural member (16) to the reverse surface (7) by partial penetration welding, such that each partial penetration weld (17) only partially penetrates the sheet of metal (4) and leaves the aerodynamic profile-defining surface (6) undisturbed.

2. A method as in claim 1 including the step of attaching further structure (5) to the series of structural members whereby to form a series of closed passages adjacent the sheet of metal (4) for sucking air through the perforations (18) thereof.

3. A structure comprising a sheet of perforated metal(4) having an aerodynamic profile-defining surface (6) and a reverse surface (7), and a series of structural members (16) attached in abutting relationship to the reverse surface (7), characterised in partial penetration welds (17) attaching the structural members (16) to the reverse surface (7) and only partially penetrating the sheet of metal (4) and leaving the aerodynamic profile-defining surface (6) undisturbed.

## Patentansprüche

1. Verfahren zur Erzeugung einer Struktur, die aus einem perforierten Metallblech (4) besteht, das eine ein aerodynamisches Profil definierende Oberfläche (6) und eine rückwärtige Oberfläche (7) aufweist, wobei eine Reihe struktureller Glieder (16) stumpf auf der rückwärtigen Oberfläche (7) festgelegt ist und das Verfahren die folgenden Schritte aufweist: es werden die Perforationen (18) in dem Metallblech (4) angebracht, es wird das Metallblech auf das erforderliche Profil verformt, es wird jedes strukturelle Glied (16) stumpf gegen die rückwärtige Oberfläche (7) des Metallbleches gelegt und dort befestigt,
dadurch gekennzeichnet, daß jedes strukturelle Glied (16) an der rückwärtigen Oberfläche (7) durch Teileindringschweißung derart festgelegt ist, daß jede Teileindringschweißstelle (17) nur teilweise in das Metallblech (4) eindringt und die das aerodynamische Profil definierende Oberfläche (6) unbeschädigt verbleibt.

2. Verfahren nach Anspruch 1, welches außerdem den Schritt aufweist, ein weiteres Glied (5) an den strukturellen Gliedern festzulegen, wodurch eine Reihe geschlossener Kanäle benachbart zu dem Metallblech (4) gebildet wird, um Luft durch die Perforationen (18) abzusaugen.

3. Struktur, bestehend aus einem perforierten Metallblech (4) mit einer ein aerodynamisches Profil definierenden Oberfläche (6) und einer rückwärtigen Oberfläche (7) und mit einer Reihe struktureller Glieder (16), die stumpf gegen die rückwärtige Oberfläche (7) gefügt und dort befestigt sind,
dadurch gekennzeichnet, daß durch Teileindringschweißungen (17) die strukturellen Glieder (16) an der rückwärtigen Oberfläche (7) festgelegt sind und die Teileindringschweißung nur teilweise in das Metallblech (4) eindringt und die das aerodynamische Profil definierende Oberfläche (6) unbeschädigt verbleibt.

## Revendications

1. Procédé de formation d'une structure comportant une feuille de métal perforée (4) ayant une surface définissant un profil aérodynamique (6) et une surface arrière (7), et une série d'éléments structurels (16) fixés dans une relation de butée sur la surface arrière (7), le procédé comportant les étapes consistant à former les perforations (18) dans la feuille de métal (4), former la feuille de métal selon le profil voulu, présenter et fixer chaque élément structurel (16) sur la surface arrière (7) de la feuille de métal dans une relation de butée avec celle-ci, caractérisé en ce que chaque élément structurel (16) est fixé sur la surface arrière (7) par une soudure à pénétration partielle, de telle sorte que chaque soudure à pénétration partielle (17) pénètre seulement partiellement dans la feuille de métal (4) et laisse intacte la surface définissant un profil aérodynamique (6).

2. Procédé selon la revendication 1, comportant l'étape consistant à fixer une structure supplémentaire (5) sur la série d'éléments structurels, de manière à former une série de passages fermés adjacents à la feuille de métal (4) pour aspirer l'air à travers les perforations (18) de celle-ci.

3. Structure comportant une feuille de métal perforée (4) ayant une surface définissant un profil aérodynamique (6) et une surface arrière (7), une série d'éléments structurels (16) fixés dans une relation de butée sur la surface arrière (7), caractérisée en ce que des soudures à pénétration partielle (17) fixent les éléments structurels (16) sur la surface arrière (7) et pénètrent seulement partiellement dans la feuille de métal (4), et laissent intacte la surface définissant un profil aérodynamique (6).
